(19) Europäisches Patentamt
European Patent Office
Office européen des brevets

(11) **EP 2 747 005 A1**

(12) **EUROPEAN PATENT APPLICATION**

(43) Date of publication:
**25.06.2014 Bulletin 2014/26**

(51) Int Cl.:
***G06Q 10/08*** (2012.01)    ***G08G 1/127*** (2006.01)

(21) Application number: **12290452.7**

(22) Date of filing: **20.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
- **Marafloti, Vincenzo**
  **06160 Juan Les Pins**
  **Antibes (FR)**
- **Cordesses, Joel**
  **06600 Antibes (FR)**
- **Savornin, Richard**
  **06560 Valbonne (FR)**

(74) Representative: **Samson & Partner**
**Widenmayerstraße 5**
**80538 München (DE)**

(54) **Determining real-time delay of transportation means**

(57)    A delay of a scheduled transportation means which runs along a route according to a timetable is determined. The route comprises at least one leg. Determining the delay is based on a detailed reference schedule indicating arbitrary time-stamped reference positions of the transportation means being on time. A request is received for the transportation means' delay by a user device located on the transportation means. The request indicates at least the current position of the transportation means. The transportation means' delay is calculated on the basis of the current position indicated in the request, a time-stamp and the corresponding time-stamped reference position of the detailed reference schedule. The calculated delay is returned to the user device. The calculated delay is stored into a logbook. In response to a request not indicating the current position of the transportation means, the delay is returned on the basis of the logbook.

Fig. 1

**Description**

FIELD OF THE INVENTION

The present invention generally relates to delay determination of scheduled transportation means. More specifically, it is directed to providing real-time delay information about the transportation means to passengers with mobile user devices.

BACKGROUND

The travel time of transportation means which runs along a predetermined route is one of the primary information to most of the passengers. When travelling with public transportation means such as trains, buses, ships, airplanes or trams, the passengers usually want to know the exact travel time, the departure time and the arrival time of the transportation means. For that reason, an official timetable for each public transportation means is provided to the passengers by operating companies, e.g. on the web. In general, these official timetables include the planned departure and arrival times for all stations within a certain route. However, the transportation means may be delayed due to unexpected factors (e.g., rough weather, traffic situations, etc.). As a consequence, the timetables may not reflect the actual progression of transportation means.

JP 06044495 A discloses a method to provide delay information to passengers of a local train or bus. It describes an arrival time display device with a position measuring device such as a GPS device. The arrival delay time and the early arrival time of the train or bus is calculated by means of a time difference calculation part included in the arrival time display device by calculating a time difference between the scheduled arrival time and the present time at a certain position.

SUMMARY OF THE INVENTION

According to the present invention, a method of determining a real-time delay of a scheduled transportation means which runs along a route according to a timetable is provided. The route comprises at least one leg. Determining the real-time delay is based on a detailed reference schedule which indicates arbitrary time-stamped reference positions of the transportation means being on time. The method comprises a position-based determination and a time-based determination. The position-based determination comprises

(i) receiving a request for the transportation means' real time delay by a user device located on the transportation means, the request indicating at least the current position of the transportation means;
(ii) calculating the transportation means' real-time delay on the basis of the current position indicated in the request, a time-stamp and the corresponding time-stamped reference position of the detailed reference schedule;
(iii) returning the calculated real-time delay to the requesting user device; and
(iv) storing the calculated real-time delay into a logbook;

The time-based determination comprises returning the real-time delay on the basis of the logbook containing real-time delay entries with respect to the transportation means in response to a request by a different or the same user device not indicating the current position of the transportation means.

According to another aspect, a computer system for determining the real-time delay of a scheduled transportation means as described above is provided.

According to another aspect, a non-transitory computer readable storage medium having computer program instructions stored therein, which, when executed on a computer system, perform the method as described above.

According to still another aspect, a computer program is provided which causes, when executed on a computer system, to perform the method as described above.

Further aspects are set forth in the dependent claims.

BRIEF DESCRIPTION OF THE FIGURES

The present invention will be described with reference to the accompanying figures. Similar reference numbers generally indicate identical or functionally similar elements.

Fig. 1 depicts a flow diagram showing the principles of the present delay determination.

Fig. 2 shows a more specific flow diagram according to an example of the present delay determination.

Fig. 3 shows a Passenger Name Record (PNR) database which is utilized in an example of the present delay determination.

Fig. 4 illustrates an exemplary timetable of a scheduled transportation means.

Fig. 5 depicts an exemplary detailed reference schedule which may be employed in the present delay determination.

Fig. 6 is a calculation example illustrating reference time calculation using linear interpolation.

Fig. 7 illustrates an exemplary motion curve of a transportation means.

Fig. 8 shows an exemplary logbook which may be employed in the present delay determination.

Figs. 9a, 9b and 9c depict a detailed flow diagram showing the procedures in the user device and on the server side according to an implementation example of the present delay determination.

Fig. 10 illustrates the architecture of an exemplary system arranged to perform the present delay determination.

Fig. 11 and 12 illustrate the graphical user interface of a user device running an application performing the present delay determination.

Fig. 13 is an exemplary schematic view of the internal architecture of user device.

DETAILED DESCRIPTION OF THE FIGURES

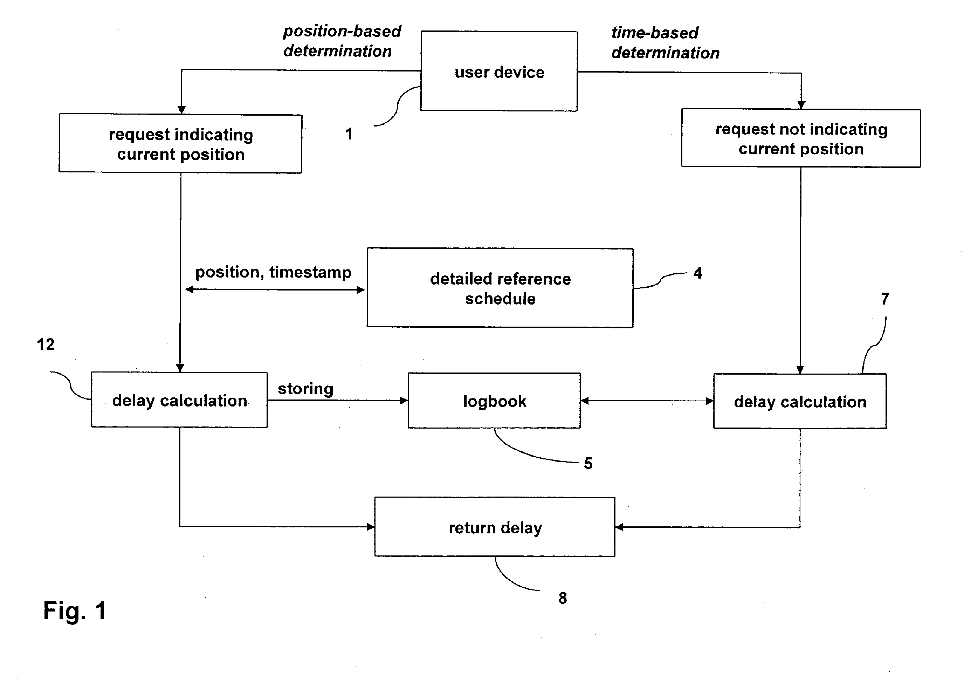

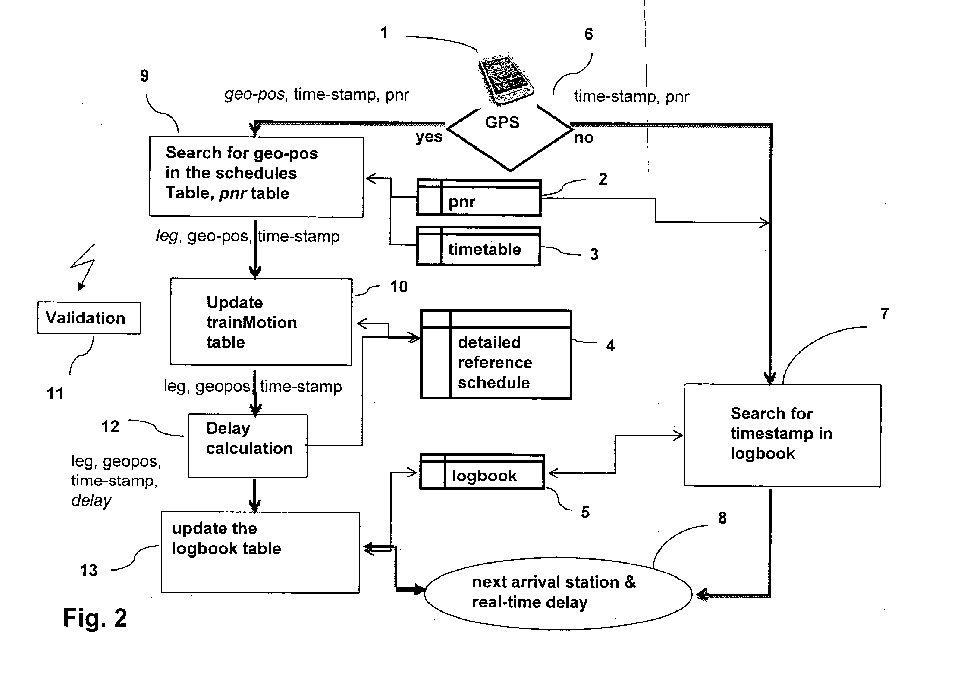

Before turning to the detailed description with reference to Figures 2 to 13, some general aspects will be set forth first on the basis of Figure 1.

The present invention generally relates to scheduled transportation means which travel regularly according to a particular timetable. Such a scheduled transportation means may, for example, be a train (such as an international, a high-speed, a national, regional or a suburban train), a bus, a shuttle car, an airplane, a ship or a ferry, a tram or any other public transportation means.

Timetables are normally created and issued by the operator of the transportation means. For example, the SCNF creates and issues timetables for all the TGVs running in France, whereas the Deutsche Bahn generates and issues the timetables of the ICEs running in Germany. The operator makes the timetables available to the public and, in particular, to passengers at stations, via the Internet or at/in the transportation means itself. The timetables of the transportation means normally indicate the origin and the final destination of a transportation means as well as the intermediate stations. Furthermore, they normally indicate the departure time at the origin station and the arrival time at the final destination and as well as departure times and, optionally, arrival times at the intermediate stations.

By this, the timetables of the operators logically group the scheduled transportations means regarding their route and their travel time. Transportation means going an identical route at identical times are hereinafter referred to as transportation means belonging to a particular "connection". For example, all trains running daily from Nice to Paris at 10 o'clock form such a connection. On the other hand, the term "route" refers to the way of the scheduled transportation means according to the timetable from the origin station to the final destination. For example, in case of the trains belonging to the aforementioned connection (i.e. the daily 10 o'clock TGV from Nice to Paris), the route is given by the rail tracks between Nice and Paris. Furthermore, in general, the route of a scheduled transportation means is composed of legs. In the following, the term "leg" refers to a part of the route between two subsequent stations listed in the timetable. Exceptionally, a route consists of only one leg if the timetable does not prescribe any intermediate stop between the origin station and the final destination. Normally, however, the route is divided into a plurality of legs. If, for example, the timetable indicates six intermediate stations between the origin and the final destination, the route is subdivided into seven legs.

Usually, passengers are not only interested in the planned arrival and departure times of a transportation means which are set by the operator's timetable, but also in the actual progression of a particular transportation means they intend to use or they are currently using. For example, in order to minimize waiting times or choose a suitable connecting transportation means, it is beneficial for passengers to have knowledge whether their transportation means is currently perfectly on time, behind schedule or even before schedule. In this respect, the term "delay" is used herein to cover all three of these possibilities. Hence, the delay is positive when the transportation means is behind schedule and will arrive at the next station probably later than indicated by the timetable. It is zero when the transportation means is on time and will probably arrive at the next station at the time indicated by the timetable. It is negative if the transportation means is before schedule and will, thus, probably reach the next station earlier than indicated by the timetable.

In order to address this need, user devices are known in the prior art which are adapted to calculate the current delay of a transportation means. An example is JP 06044495 A which was already mentioned above. However, the delay calculation disclosed therein requires manual input of the destination information and a provision of the present position of a user, for example by utilizing the Global Positioning System (GPS). Hence, in situations with bad or non-existent GPS coverage this system does not work properly. In addition, the approach described by JP 06044495 A is based on simply comparing the scheduled arrival time with the present time and the destination position with the present position. Apparently, linear progression of the user's vehicle is assumed. This does not correlate with real-world progression which is normally non-linear. Thus, the approach proposed by JP 06044495 A is inherently inaccurate.

It is an object of the present invention to address those problems of the prior art. The delay information method/system presented herein allows providing real-time delay information to user devices which are not equipped with position determination functionality or are in situations in which a position determination is not possible. Furthermore, it aims at improving the accuracy of the delay information.

On the one hand, the present delay determination is based on a reference schedule 4 which is more detailed than the timetables issued by the transportation means operators. As outlined before, those operator timetables merely contain target times regarding the stops or stations of a transportation means. However, this information is presently considered to be insufficient because it does not provide any reference information for positions between the intermediate stations, i.e. within the legs. One possibility to supplement the operator timetables is to assume linear progression of the transportation means between the intermediate stations and, accordingly, to "fill in" the timetables by linear interpolation. However, presently, the detailed reference schedule 4 is introduced which aims at reflecting the actual real-world progression of the on-schedule transportation means between its intermediate stations more accurately. For this purpose, the detailed reference schedule 4 contains target time information for any arbitrary locations along the route, in addition to the target time information at the intermediate stations which can be taken from the respective operator timetable. In other words, the detailed reference schedule 4 does not only indicate the arrival and departure times of stations prescribed by the operator, but also and in particular includes additional time-stamped reference positions of transportation means being on time, the positions being arbitrary, i.e. independent from the stops or stations. In a deployed system operating according to the delay determination presented herein, detailed reference schedule data will exist for each connection to be covered by the present delay determination. For example, referring again to the TGV example mentioned before, there will be detailed reference schedule data for the daily TGV from Nice to Paris departing from Nice at 10 o'clock and further detailed reference schedule data for the daily TGV from Nice to Paris departing from Nice at noon. There are several possibilities to establish such a detailed reference schedule 4 which will be described further below. One possibility is the so-called "social approach" according to which data from position-based requests relating to transportation means that have been on time are collected. This detailed reference schedule 4 allows determining the delay of the transportation means more precisely due to the increased granularity of the reference data, compared with the timetable-based approach only using scheduled stops as reference data.

On the other hand, the present delay determination method utilizes a logbook 5 in which real-time delay information about the transportation means in question are collected. The logbook 5 is filled with real-time delay information generated by position-based delay determination which is performed as follows (visualized by the left-hand branch of Figure 1):

A passenger located on or at the transportation means is equipped with a mobile user device 1 such as a mobile phone, a smartphone, a laptop, a tablet computer etc. The user device 1 generates a request for the transportation means' real-time delay. This request includes at least the current position of the user device 1 which is identical to the current position of the transportation means. It is issued to a server or may, alternatively, be processed locally at the user device 1 using a cache mechanism (this will be explained in more detail below). The request is then received, either by the server or internally by the user device 1. Next, the request is processed in order to calculate the delay of the transportation means. On the basis of the current position indicated in the request and, in addition, a time-stamp associated with the request, the detailed reference schedule 4 is consulted and respective time-stamped reference positions regarding transportation means on-time are used to calculate the real-time delay of the transportation means (at box 12 in Figure 1). The specifics of the delay calculation are described further below. The resulting delay information is, at box 8 in Figure 1, returned to the user device 1 (again, either by the server or internally within the user device 1). In addition, however, the calculated delay information is logged and stored in the logbook 5.

The logbook 5 filled with the delay information obtained by the position-based determination facilitates a purely time-based determination (depicted on the right-hand branch of Figure 1) which works without any position determination by the user device 1. The user device 1 - which may be the same or another user device that has issued a position-based request beforehand - generates a time-based request which, in contrast to the position-based request described above, does not include an indication of the user device's 1 current position. The reason for this could be that the device 1 is incapable of determining its current position, either because it is not equipped with any position-determination means, it is only equipped with inaccurate position determination means which are insufficient for the purpose of the present delay determination or a position determination is impossible at the time of the request, e.g. due to lack of coverage, lack of free line of sight to satellites, remoteness from the transportation means (e.g. an interested user at home), etc. Provided that logbook data associated with the user's transportation means can be determined on the basis of this time-based request, it is possible to determine the delay of the transportation means (at box 7 in Figure 1) and to return delay information (again at box 8 of Figure 1) concerning the transportation means on the basis of the real-time delay entries available in the logbook 5.

In this way, real-time delay information concerning the transportation means is displayed on a passenger's user device 1. The real-time delay information may include, e.g., the scheduled arrival time of the transportation means at a station according to the operator's timetable, in particular the next station (the endpoint of the current leg), the current time delay of the transportation means and the respective potential actual arrival at the next and/or final destination.

As outlined above, both, the position-related request and the time-related request, are associated with a time-stamp. This time-stamp is used to determine the leg at which the transportation means is supposed to be located at the time of the request and for the calculation of the real-time delay. There are basically two ways to generate the time-stamp. One possibility is to directly include it in the request by the user device 1. Thus, according to this option, the requests actually contain the time-stamp. The other possibility is to generate the time-stamp only at the reception of the request. This option is particularly useful if the request is processed centrally by a server (as opposed to process it locally at the user device 1 using the cache mechanism described further below). Generating the time-stamp at the server ensures a consistent time management as all requests are time-stamped by one and the same server-side clock. A similar consistent time management is also possible when using the first option (including the time-stamp in the request), namely if the user devices 1 are synchronized with a trusted clock.

As already indicated above, there are several options how to establish the detailed reference schedule 4 and to create the necessary arbitrary time-stamped reference positions of the transportation means. As already explained at the outset above, these time-stamped reference positions are "arbitrary" because they refer to any locations on the route independent from the stations or stops of the transportation means. One possibility to establish the detailed reference schedule 4 is the so-called "social approach" which is independent from cooperation of the transportation means operators. Thus, it can be employed without having to rely on the good will of the operators to deliver detail data about the network and the timing conditions of their transportation means. The social approach utilizes actual position-based requests issued by the user devices 1 located on the transportation means. As each of these requests provides a position of the transportation means and an associated time-stamp (i.e. a time-stamp + position pair), they generally provide a valuable data base. As the entries of the detailed reference schedule 4 serve as reference time-stamped positions, a validation of the collected data is performed. From the overall number of collected time-stamp + position pairs, those pairs are sought which belong to transportation means that were on time (i.e. transportation means which progressed in accordance with the timetable of the operator) and the remaining data sets from transportation means that were not on time are discarded. This sorting out can be performed by looking at the time-stamp + position pairs with positions in the vicinity of the stations for which the operator has set reference times. If pairs with positions in the vicinity of the stations correspond to the times prescribed by the operator's timetable, the respective transportation means is considered to have been on time and all time-stamp + position pairs collected from this transportation means are considered as valid and they are included in the detailed reference schedule 4.

Further optional alternatives to establish the detailed reference schedule 4 are artificial requests which could be generated by dedicated staff personnel on the transportation means, simulation or provision of respective data by the transportation means' operators.

The logbook 5 is utilized (box 7 in Figure 1) in response to requests not indicating the current position of the transportation means in basically two ways. One way is to simply return the most recent real-time delay entry concerning the transportation means in the logbook 5 to the requesting user device 1. This option is particularly suitable if this most recent entry in the logbook 5 is up to date and, therefore, reflects the current real-time delay of the transportation means accurately. The up-to-dateness of the last entry in the logbook 5 is, for example, determined by a comparison of the time-stamp of the logbook entry with the time-stamp associated with the request. If the difference between these two time-stamps is below a given threshold, for example lower than 5 or 10 minutes, or it is still within the current leg of the transportation means, correctness of the last logbook entry is assumed and the delay information of this most recent logbook entry is returned. The other way of utilizing the logbook 5 for requests not indicating the current transportation means' position is extrapolation of the logbook entries in order to assess a trend of the delay. Extrapolation might be considered suitable if the most recent logbook entry is rather old (e.g. the difference between the time-stamp of the last entry and the request is above the given threshold mentioned before), it is therefore presumably out-of-date and may not reflect the actual real-time delay of the transportation means accurately. An extrapolation technique which may be suitably applied is exponential smoothing. The outcome of the extrapolation is returned to the user device 1.

Similarly, there are various options for the real-time delay calculation (box 12 in Figure 1) in response to requests indicating the current position of the transportation means. For example, if the detailed reference schedule 4 contains a time-stamped reference position which corresponds to the current position of the transportation means indicated in the request, it is sufficient to calculate the difference between the reference time-stamp associated with that position in the detailed reference schedule 4 and the time-stamp associated with the request. This difference between the two time-stamps is the accurate real-time delay of the transportation means and is returned to the user device 1 (at box 8 in Figure 1). If, on the other hand, the detailed reference schedule 4 does not include a reference position corresponding with the position indicated in the request, there are two further options. Either, the detailed reference schedule 4 is searched for the reference position closest to position indicated in the request and the real-time delay is calculated as just described before, i.e. by calculating the difference between the reference time-stamp associated with that position in the detailed reference schedule 4 and the time-stamp associated with the request. However, this introduces a certain inaccurateness which becomes more substantial the more the two positions (i.e. the position in the detailed reference schedule 4 and the position in the request) deviate from each other. To minimize this inaccurateness, alternatively, linear interpolation techniques with respect to the time-stamped positions in the detailed reference schedule 4 in the vicinity of the position indicated in the request may be employed.

It was already briefly outlined above that detailed reference schedule data will exist for each connection and transportation means to be covered. Thus, the correct transportation means or the respective connection and the corresponding detailed reference schedule data have to be deduced from the user device's request. One option for making this association between request and transportation means/connection/detailed reference schedule data is an identification code included in the request which allows identifying the transportation means. It is then possible to conclude to the correct timetable data, to the current leg (by using the geo-position contained in the request) and to the relevant data in the detailed reference schedule 4. In one implementation example, this identification code is a Passenger Name Record (PNR) identifier which allows querying a PNR database for itinerary information of the passenger. This itinerary information may include information regarding the connection of the transportation means the passenger is currently using. Alternatively, an identification code other than a PNR identifier is included in the request. For example, the user device 1 may prompt the user to enter the transportation means and the connection, respectively, s/he is currently using and the passengers then manually enters this information which is then included in the request.

In an optional implementation, the position-based determination includes caching the detailed reference schedule 4 at the requesting user device 1. For example, the user device 1 directs its first position-based request regarding a particular transportation means to a delay determination server. The server maintains the detailed reference schedule 4 containing the data associated with the connection of the transportation means the passenger is currently using. The position-based request of the user device 1 is processed by the delay determination server as described above and the calculated real-time delay is returned to the user device 1. In the optional implementation using caching, however, the detailed reference schedule data belonging to the current transportation means of the passenger is also transferred to the user device 1, either together with the real-time delay information or in a separate message before or after the real-time delay information was returned by the server. The detailed reference schedule data is then buffered in a cache memory at the user device 1. Consequently, subsequent position-based requests by the same user device 1 can be processed locally at the user device 1, without any need to transmit the position-based request to the delay determination server. In this way, position-based delay calculation becomes possible without the necessity for the user device 1 to activate any external communication link and can, for example, therefore be performed in areas without radio coverage.

If the position-based delay determination is performed locally at the user device 1 using the cached detailed reference schedule 4 due to the user device 1 lacking a radio link, it is consequently not possible to store the locally calculated real-time delay information in the logbook 5 which may be maintained in the delay determination server. If this happens, the locally calculated delay information will also be buffered locally at the user device 1, in a local logbook. When a radio link is again available at a later point of time, the user device 1 transmits the buffered real-time delay information back to the delay determination server and the information is then incorporated into the (central, server-side) logbook 5.

Caching at the user device 1 is not limited to the detailed reference schedule data of the transportation means the passenger is currently using. Rather, it may usefully be extended to other information. For example, further detailed reference schedule data potentially relevant for future transportation means the passenger is likely going to use, such a connecting transportation means, may be cached at the user device 1 as well. If feasible in view of available buffer space at the user device 1 and communication link bandwidth available to the user device 1, even more or all detailed reference schedules data which may become relevant to the passenger in future is transferred to the user device 1 and stored there for local position-based delay determination. Furthermore, in response to the first position-based request by the user device 1, also the server-side logbook 5 may be transferred to the user device 1 and cached there. Although this cached logbook gets out of date and therefore less significant when not updated for a longer period of time, it enables time-based determination to be performed locally at the user device 1 without any need to consult the delay determination server. The extent to which data is cached at the user device is a trade-off between the resources available for the user device (e.g. free buffer space, quality of the communication link) and the potential improvements achievable by the cached data.

The basic approach outlined above, i.e. filling a logbook 5 with real-time delay information by collecting position-based delay requests and their calculation results, may be leveraged to further applications. For example, the information maintained by the logbook 5 may be forwarded to displays at stations, to websites or web services accessible via the Internet, push services like RSS or SMS or any other broadcast-like information distribution channels. Thus, other people which are not travelling on the respective transportation means can benefit from the present real-time delay determination mechanism, independent from their current location.

In addition, it is within the scope of the approach presented herein to feed the real-time delay system and the logbook 5 by messages which are not necessarily directed to get information about the real-time delay of the transportation means. Rather, such messages could purely serve the purpose of informing the system about the current delay of the transportation means without actually requesting the delay. For example, persons like station personnel, actual or potential travellers or other interested people may send messages, for example, by using GSM SMS, to the delay determination server and thereby indicating a location and the current delay of a particular transportation means. In response to such a message, the delay determination server performs a verification of the information and, if the information is found to be likely valid, adds the delay indication to the logbook 5.

Now turning to the more detailed description, Figure 2 shows a more specific example of the present real-time delay determination. Similar to Figure 1, the left-hand branch of Figure 2 shows the position-based delay determination, whereas the branch on the right-hand side refers to the time-based delay determination.

In the example of Figure 2, the user device 1 is a smartphone equipped with a locally installed delay determination application which is arranged to generate delay determination requests. It has a graphical user interface that is arranged to display information to the user and to allow user inputs if the user wishes to initiate the present delay determination. It is also provided with a mobile communication interface by means of a 2G, 3G and/or 4G transceiver and/or transceivers operating to other mobile communication standards such as WiFi IEEE 802.11. These communication interfaces facilitate mobile communication, in particular transmission of delay determination requests and reception of real-time delay information.

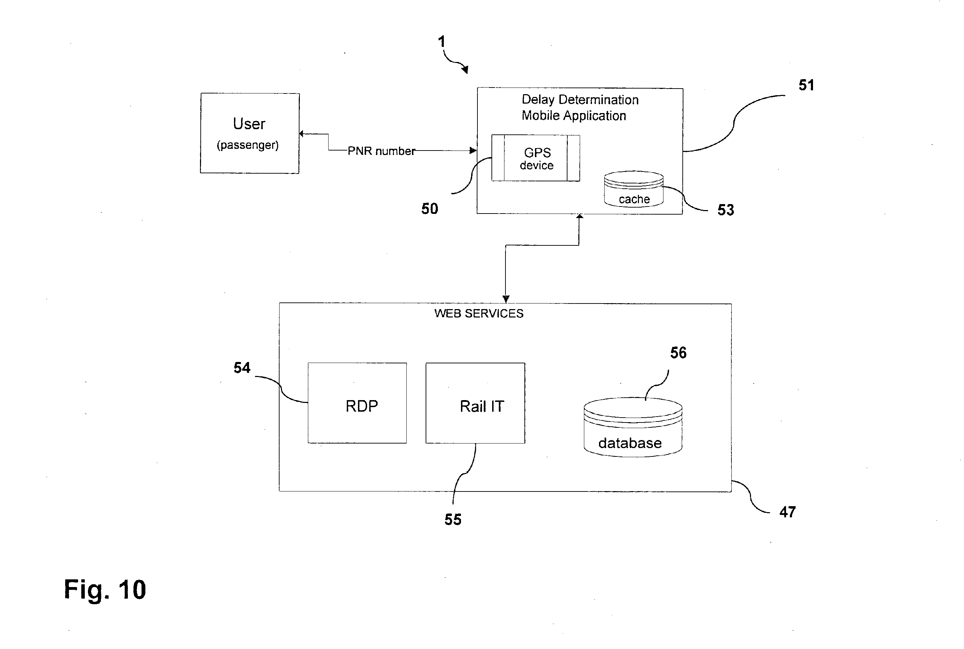

Furthermore, it is equipped with a GPS transceiver and, thus, capable of determining its location, provided that a communication link to GPS satellites can be established. If GPS is unavailable for some reason, the smartphone 1 may employ other position determination methods such as triangulation or Observed Time Difference techniques. If position determination is possible, the smartphone 1 initiates the position-based delay determination after a respective input command from the user. It determines its position and includes the resulting geo-position in the request. Furthermore, a time-stamp indicating the current time is included in the request generated by the smartphone 1. Alternatively, as explained above, the time-stamp is not included in the request, but only taken at the side of the server for reasons of overall time consistency. Finally, a PNR identification is included in the request. Either, the user is prompted to enter it or it is generated automatically if respective information is available locally at the smartphone 1. When the smartphone 1 has finished the creation of the position-based request, it transmits it over a suitable mobile communication link to the delay determination server 47 (the server is not shown in Figure 2, a high-level architecture of the overall system will be described further below with reference to Figure 10).

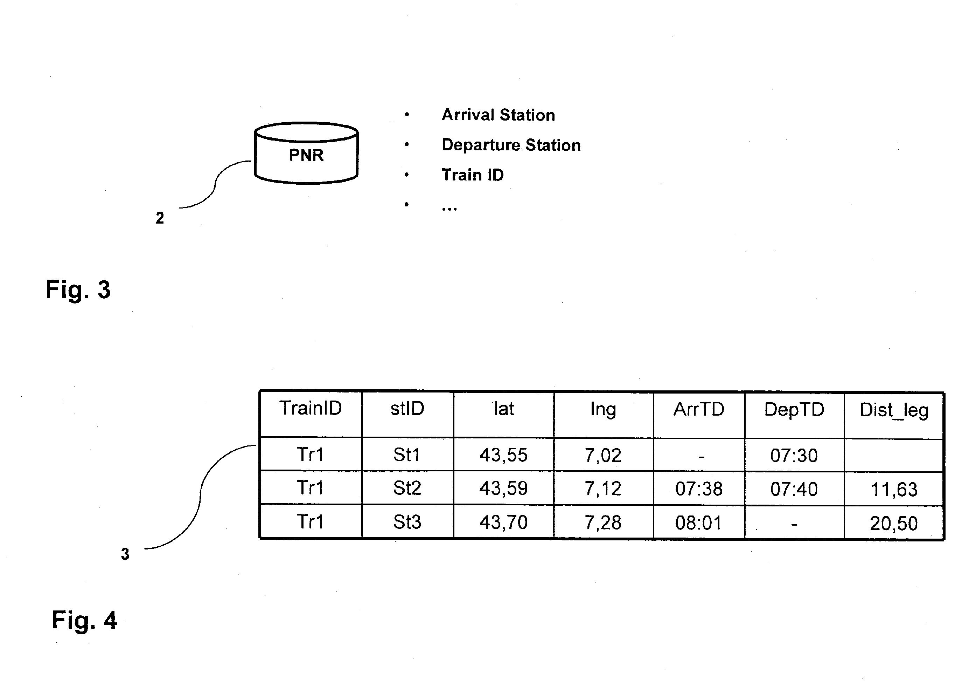

After the request is received by the server, the geo-position and PNR identification included in the request is utilized to determine the transportation means (more correctly, the connection of the transportation means) the user is currently located on and, more specifically, the current leg of the route on which the transportation means is currently located. For this purpose, the delay determination server 47 is suitably coupled to a travel information system such as a PNR database 2. A schematic representation of the PNR database 2 is given by Figure 3. It includes itinerary information of the user's travel. The travel may be composed of several segments such as a flight from A to B and a connecting train travel from B to C. One of the segments is formed by the current transportation means on which the user is located and to which the delay determination request relates. In the following, it is referred to this example of a train travel from B to C for illustrative reasons, this example shall not introduce any limitations with respect to the type of transportation means. For the present purpose of finding out the transportation means to which the request relates, respective identification information kept in the PNR database 2 is of most interest, i.e. the ID of the train the user is supposed to take for his/her travel from B to C according to the itinerary (cf. Figure 3).

After having got hold of the train ID (for example: "Tr1"), it is possible to reference the correct timetable 3 of the train operator which is also available to the server 47. An example of a timetable 3 is given by Figure 4. The timetable may include several parameters, among them the TrainID, a StationID ("stID"), geo-positions of the stations ("lat" standing for latitude, "lng" standing for longitude, indicated in degrees) as well as arrival and departure times ("ArrTD", "DepTD"). Thus, according to the very simple example of Figure 4, the origin station of train Tr1 is St1 which is located at 43,55 degrees lat and 7,02 degrees lng. The train is supposed to depart from there at 7:30. The next stop is intermediate station St2 which is located at 43,59 degrees lat and 7,12 degrees lng. The train should arrive there eight minutes later at 7:38 and leave after a two-minutes stay at 7:40. The final destination is station St3 located at 43,70 degrees lat and 7,28 degrees lng which is supposed to be reached at 08:01. In addition, the timetable 3 may include geo-position information of the stations as well as distance information between the stations, i.e. the length of a leg (not shown in Figure 4). The goal of querying the timetable 3 is to determine the leg at which the transportation means is currently located (in other words: the next planned stop according to the operator's timetable 3). Therefore, the geo-position included in the request is passed as an argument of the query to the timetable 3 and the current leg is retrieved. Hence, the process proceeds further with the geo-position (as originally included in the request), the time-stamp (either included in the request or set upon receipt of the request by the server) and the leg (determined from the consultation of PNR database 2 and timetable 3 as just described).

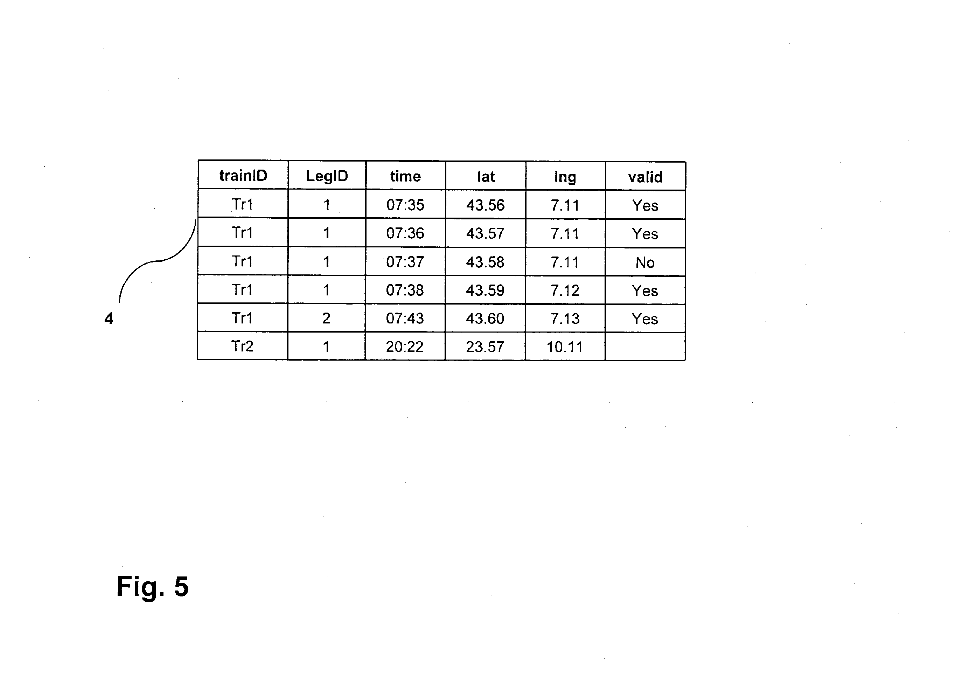

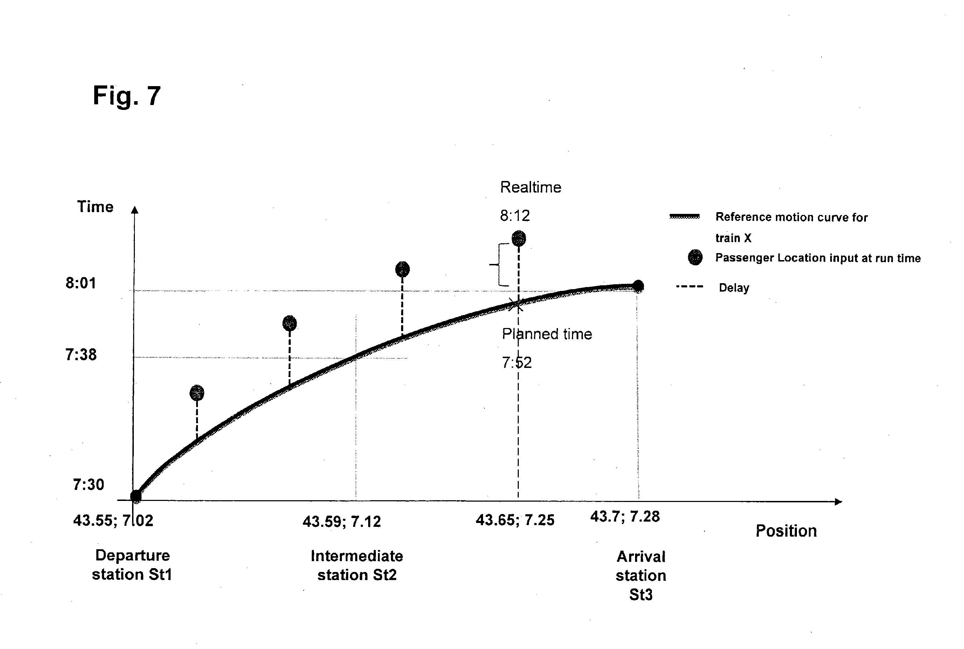

The next step is an update of the detailed reference schedule 4 (box 10 in Figure 2). As described already in detail above, the detailed reference schedule contains arbitrary time-stamped reference positions, i.e. time stamp + position pairs for transportation means being on time according to the timetable 3 of the operator. An example of a detailed reference schedule 4 is given by Figure 5. It contains the trainID (e.g. Tr1, Tr2), a legID, a time-stamp and a position (lat, lng). According to the example of Figure 5, train Tr1 is supposed to be at coordinates 43,56 degrees lat, 7,11 degrees lng at 7:35, at 43,57 degrees lat, 7,11 degrees lng at 07:36 and so on. This collection of arbitrary time-stamped reference positions forms a motion curve of the transportation means (cf. Figure 7) which is more accurate the more validated data it contains.

As described above, one approach to establish and enrich the detailed reference schedule table 4 is the so-called "social approach": actually occurring position-based user requests are collected and stored in that table. The step of updating 10 the detailed reference schedule table 4 serves exactly this purpose. It is generally optional because it is not required if already sufficient valid data is present in the detailed reference schedule table 4. Updating 10 means that the pair of geo-position and time-stamp is added to the detailed reference schedule table as a reference date. However, if this optional addition is performed, a further process is executed subsequently, namely validation 11. The added time-stamped reference position needs to be validated in order to ensure that it is indeed suitable to act as a reference position. It is only suitable if the transportation means (i.e. train Tr1 in the present example) is actually on time. As already explained above, the determination whether that particular Tr1 is on time or not can be made by matching the arbitrary time-stamped positions added to the detailed reference schedule table with the reference data of the timetable 3. As long as validation has not yet been performed, the corresponding value in the flag "valid" is set to "No" (cf. Figure 5). If an entry which has not yet been validated is found to be valid, the value of the "valid" flag is changed to "Yes". If it is found to be invalid (i.e. the train has not been on time), it is deleted from detailed reference schedule table 4.

The position-based delay determination then moves on with the actual calculation of the delay (box 12 in Figure 2) on the basis of the validated entries of time-stamped reference positions in the detailed reference schedule table 4. The geo-position originating from the request by the smartphone 1 is tested against the detailed reference schedule table 4. If the detailed reference schedule table 4 contains a reference position exactly matching the geo-position of the request in which case the reference time can simply taken out of the detailed reference schedule table 4. Otherwise, the reference time for this geo-position is calculated by linearly interpolating the times associated with the reference positions in the detailed reference schedule table 4 directly before and after the geo-position from the request. Is it also not excluded that the detailed reference schedule 4 only contains very few time-stamped reference positions with respect to the current leg or none entries apart from the stops/stations at all. This may in particular be the case in the early phase of the deployment of the present delay determination or after the underlying timetable has been changed (which happens to train timetables, for example, two times a year). In this case, the detailed reference schedule 4 will at least contain the data which can be taken from the operator's timetable and the delay is calculated by using linearly interpolating the time and geo-position indications.

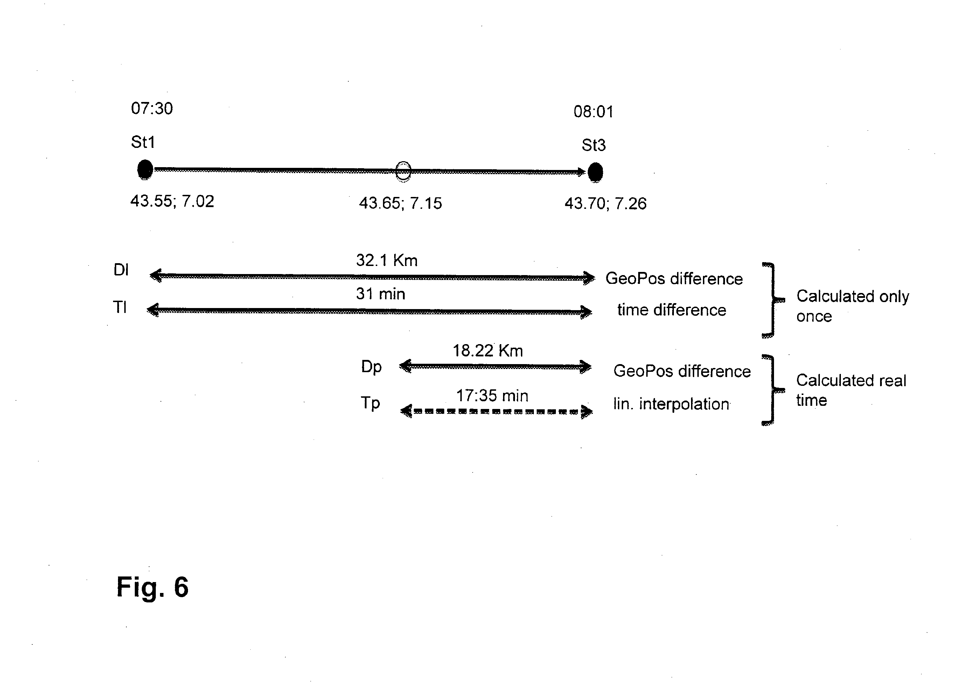

An example is given by Figure 6 which assumes that the detailed reference schedule 4 only contains reference times regarding the departing station St1 (departing at 7:30) and the final destination St3 (arrival at 08:01). The distance between the two stations is either present in the timetable (cf. Figure 4) or is estimated from the geo-positions of the stations by using the following equations:

$$\text{Distance (St1, St3)} = \text{arcos (cos (lat\_St1 - lat\_St3) cos (lng\_St1) cos (lng\_St3) + sin (lng\_St1)}$$
$$\text{sin (lng\_St3))}$$

[Note: Arguments of sinus and co-sinus expressions are given in radians.]
Distance in km = Distance (St1, St3) * 6372,795477598

The distance between the current geo-position indicated in the position-based request received from the user device 1 and the next station or reference position in the detailed reference schedule 4 is calculated in the same manner. Then, linear interpolation is performed by using the following rule of three:

$$Tp = TI * Dp / DI$$

wherein Tp is the time needed to reach the next reference position assuming linear progression of the transportation means, TI is the reference time needed by the transportation to complete the trip from the previous to the next reference position, Dp is the distance between the current location and the next reference position and DI is the distance between the two reference positions (cf. specific exemplary numbers given by Figure 6). Hence, in the example of Figure 6, train Tr1 should be located at the reference position of 43,65 degrees lat; 7,15 degrees lng indicated in the request at 7:42 and 25 seconds (08:01 - 17 minutes 35 seconds) which is the resulting reference time calculated from the geo-position indicated in the request and the data contained in the detailed reference schedule 4.

The difference between this resulting reference time and the time-stamp associated with the request is calculated which is the desired real-time delay of train Tr1.

An example of the delay calculation 12 according to a position-based request is given with reference to Figure 7. Figure 7 depicts the reference motion curve of train Tr1 as prescribed by the detailed reference schedule table 4. The position is plotted on the X axis, the time plotted on the Y axis of the diagram. As described above, this motion curve is, for example, established by collecting time-stamp + position pairs contained in position based requests relating to transportations means of the very connection which were on time. The more entries are generated and collecting in the detailed reference schedule 4, the more accurate and complete the motion curve will be. By using this motion curve, the reference time of train Tr1 is determined with the geo-position included in the request as input parameter. For example, the geo-position of 43,65 degrees lat, 7,25 degrees lng corresponds to a reference time of 7:52 according to the motion curve. This reference time is then compared with the actual time of the time-stamp associated with the request. If this time-stamp reads 8:12, the real-time delay is 20 minutes.

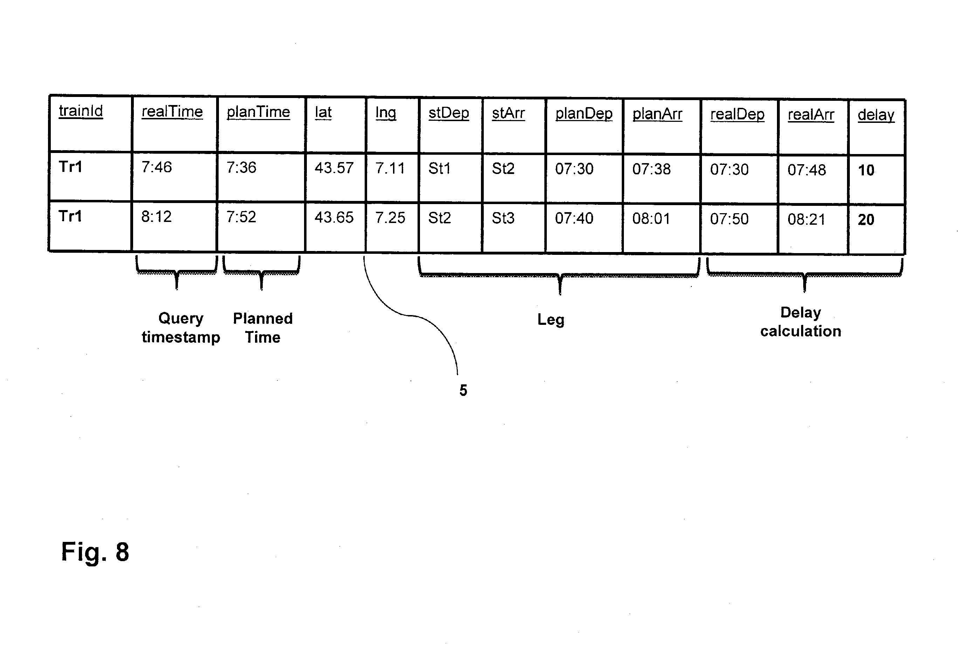

Referring back to Figure 2, the position-based delay determination process proceeds with updating the logbook table 5 (box 13). As explained already above, the purpose of the logbook table 5 is to make the real-time delay information available to passengers who are unable to provide position information with their requests. An example of a logbook table 5 is given by Figure 8. It contains the trainID (e.g. Tr1, Tr2), reference information from the detailed reference schedule table 4 (e.g. "planTime") and the timetable 3 (departing station ["stDep"], next arrival station ["stArr"], planned departure time ["planDep"] and planned arrival time ["planArr"]). In particular, it contains real-time information from the request and the delay calculation, namely the geo-position indicated in the request ("lat, lng"), the time-stamp associated with the request ("realTime"), the delay and the presumed arrival at the next station ("delay", "realArr").

Finally, the requested real-time delay information such as the next arrival station and the real-time delay value is transferred back to the smartphone 1 (step 8 in Figure 2) via the mobile communication interface. The client software installed on smartphone 1 then displays the information to the passenger.

Now turning to the time-based delay determination depicted on the right-hand side of Figure 2, the smartphone 1 generates a time-based request without an indication of its current position in situations the GPS signal is too weak or no GPS link is available at all. Hence, the time-based request only includes a time-stamp (which alternatively might also only be added at the server side) and the PNR identification. The request is transmitted to the server 47. The PNR database 2 and the timetable 3 are consulted in order to determine the trainID as it was described before regarding the position-based determination. After having determined the trainID in this way, the logbook table 5 is queried by using the trainID in order to seek potentially existing real-time delay information which have been generated by previous position-based delay determinations. For example, if it is determined that the logbook table 5 contains an entry for the present leg of the passenger's train, the delay associated with that entry is taken.

In the example of Figure 8, train Tr1 is assumed to be on its second leg between stations St2 and St3. According to the timetable, it should have departed at station St2 at 7:40 and arrive at St3 at 8:01 (cf. also Figures 4 and 5). Along its travel, two position-based requests have been occurred and processed and the calculated real-time delays have been stored in the logbook table 5. The first position-based request occurred at 7:46 while Tr1 was still on its first leg between St1 and St. A delay of 10 minutes was detected. Later on, as Tr1 has progressed to its second leg between St2 and St3, another position-based request was received at 8:12 and a further increased delay of 20 minutes was determined. Now assuming that a time-based request is received by server 47 at 8:15, the logbook table 5 is consulted and the 8:12 entry regarding the current leg of train Tr1 which is only three minutes old is found. The delay value of this entry, i.e. a delay of 20 minutes, is determined (box 7 in Figure 2). The delay and, for example, the next arrival station St3 is then returned to the smartphone 1 which displays the information to the passenger.

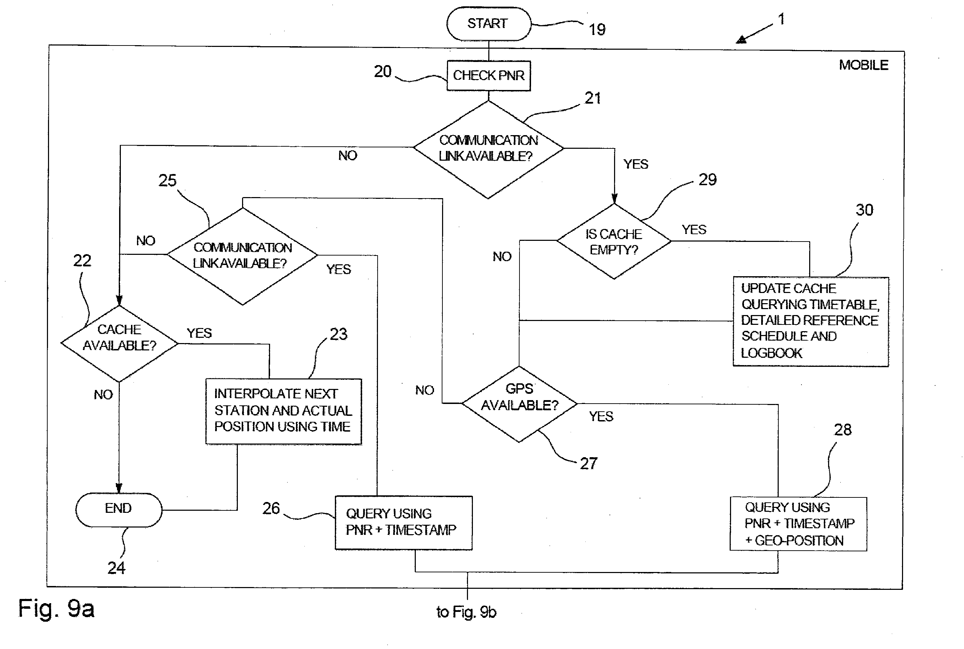

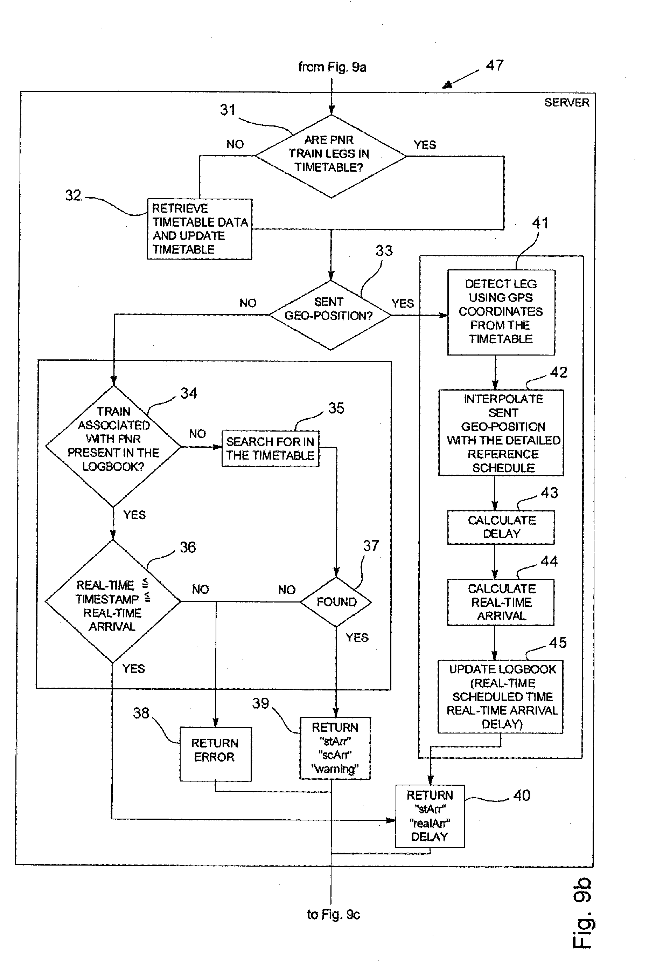

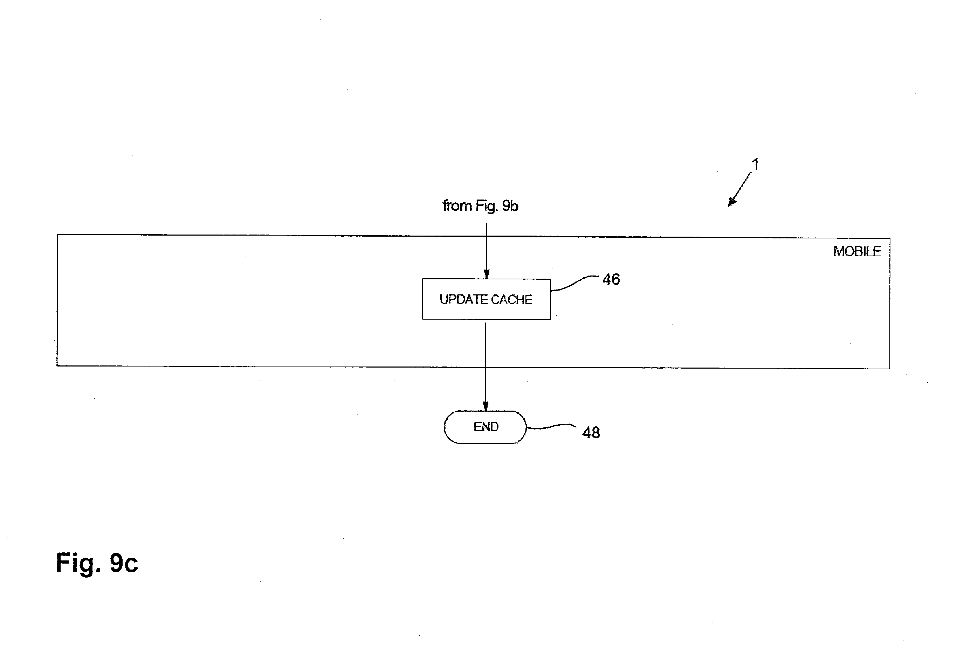

In the following, an implementation example of the position-based and time-based delay determination including the caching function already outlined above will be discussed in more detail with reference to the flow diagrams of Figures 9a, 9b and 9c. Figure 9a depicts the processes going on at the user device 1 until a request for delay determination is issued. Figure 9b shows the processing of the request at the server 47. Finally, Figure 9c visualizes the action again at the side of the user device 1, after the delay determination result has been return by the server 47.

Generally, the relevant data flows can be categorized according to the following conditions:

(i) Both, position determination function and mobile communication link are available at the user device 1.
(ii) Position determination function is available. However, a mobile communication link is unavailable.
(iii) Position determination function is not implemented or temporarily unavailable. However, a mobile communication link is available.
(iv) Neither a position determination function nor a mobile communication link are available.

The data flow in case (i) (position determination function and mobile communication link are available) is as follows:

After the start at 19, the process commences with a validity check 20 of the PNR identification which is either present within the user device 1 or was entered manually by the user. Then, after having positively confirmed the availability of a mobile communication link at 21, the user device 1 verifies the cache at 29. If the cache is empty, the mobile communication link is utilized in order to download detailed reference schedule data and current delay information regarding the transportation means referenced by the PNR identification. For this purpose, a cache update message is transmitted to the server 47 at 30. In response to the cache update message, the server 47 queries its databases (i.e. PNR database 2, timetable 3, detailed reference schedule 4 and logbook 5) and returns the corresponding data to the user device 1. The user device 1 stores these data in its cache. The cache then contains, for example, the timetable data regarding the present transportation means, in particular the next arrival station, the detailed reference schedule data for the present transportation means and recent train delay information of the present transportation means available in the logbook 5. These information will be enough to calculate or estimate the real-time delay of the present transportation means in absence of a position determination function and/or mobile communication link.

Further on, the user device 1 checks at 27 whether a GPS signal is available with a positive outcome. It then generates a position-based request at 28 and transmits it to the server 47. At the server side (Figure 9b), the server 47 checks at 31 whether a timetable 3 relating to the transportation means the passenger is currently using is already available. If this is not the case, the respective timetable information may be retrieved by the operator of the transportation means at 32. In order to be able to include these data as fast as possible, the server 47 suitably has a communication link to the operator and its timetable database.

After having positively determined at 33 that the request received by the user device 1 includes a geo-position, the server 47 optionally performs a validation of the geo-position included in the request (not shown in Figure 9b). The function of this validation is to ensure that the geo-position contained in the request is in line with the route of the train indicated by the PNR. In order to perform this validation, a description of the train's route in terms of its geo-position is available to the server 47. The geo-position indicated in the request is then compared with the geo-position reference of the route. If the geo-position of the request is determined to be "within the route", i.e. it corresponds or at least approximately corresponds to a location on the route, the geo-position of the request is considered to be valid. The geo-position reference information of the route may be obtained from the transportation means operator, an external map service, estimated by the operator of the server 47 and/or collected by and deduced from a significant number of received position-based requests. Additionally, requests indicating geo-positions on the or close to the route, but substantially remote from the actual position of the train (such as generated by future passengers already waiting at subsequent stations or former passengers who already left the train at a previous station) may be filtered out by aligning the geo-position and time-stamp pair of the request with the information already contained in the detailed reference schedule 4 and/or the logbook 5. For example, a request indicating a geo-position which the train has already passed can be filtered out if the logbook 5 contains entries for geo-positions already further down the route (such outdated requests may be still processed on the basis of the logbook 5 and, for example, the latest real-time delay contained in the logbook 5 may be returned). As another example, a request indicated a future geo-position which the train cannot have already reached by taking into account the entries of the logbook 5 may be filtered out as well (similarly, in response to such requests, the latest real-time delay information may nevertheless be returned). Generally, if the geo-position indicated by the request is determined to be not relating to the current position of the train, such a request may be treated similar to a time-based request, i.e. the geo-position is considered to be absent and real-time information may be returned by utilizing the logbook 5.

Subsequent to this optional validation step, the server 47 executes the position-based delay determination (shown at the right-hand side of Figure 9b). As explained in detail already above with reference to Figure 2, this process includes:

- determining the current leg at 41 by querying the timetable 3 using the geo-position included in the user device's request;
- querying the detailed reference schedule 4 at 42 with leg and geo-position and, if applicable, interpolating time-stamped reference positions kept in the detailed reference schedule 4;
- calculating the real-time delay and corresponding estimated arrival time at the next station at 43 and 44; and
- at 45, updating the logbook 5 with at least the time-stamp ("realTime"), the calculated real-time delay ("delay") and estimated actual arrival time ("realArr") at the next station ("stArr").

Then, the server 47 returns the resulting real-time delay information such as next arrival station, estimated actual arrival time and calculated real-time delay to the user device 1 at 40. After having received the respective message over the mobile communication link (Figure 9c), the user device 1 updates its own cache with these information at 46 and presents the information to the user via its graphical user interface. The process terminates at 48.

The data flow in case (ii) (position determination function available - mobile communication link unavailable) is as follows:

If the unavailability of the mobile communication link is determined already at the outset at 21, the user device 1 checks whether cached information relating to the transportation means indicated by the user is available at 22. If this is affirmative, delay determination is possible locally at the user device 1 at 23. Provided that the cached data includes the detailed reference schedule data concerning the user's transportation means, a position-based request is generated and processed internally by the user device 1 in a similar manner as it would have been processed by the server 47 in case the mobile communication link would have been available. The only basic difference is that updating the logbook 5 as it would be performed by the server at 45 is impossible for the user device 1 without a mobile communication link. Hence, the user device 1 buffers the relevant data in a local logbook for updating the server-side logbook 5 at a later time, when the mobile communication link becomes available again (this activity is not shown in Figure 9a). The delay information calculated locally by the user device 1 is presented to the user and the process ends at 24.

The data flow in case (iii) (a mobile communication link available, position determination function unavailable) is as follows:

In this case, the time-based delay determination is performed. The process starts again at the user device 1 with steps 19 to 21, 29 and 30 as described above with reference to data flow case (i). At 27, the user device 1 determines that a GPS signal is not available. The presence of the mobile communication link is then re-verified at 25.

Should the mobile communication link have been gone in the meantime, delay determination is then generally possible locally at steps 22 and 23 because the cache has been updated before at steps 29 and 30 and the necessary reference and logbook data should be present locally in the cache. As the present position is unknown to the user device 1 in the present scenario, the local delay determination will either correspond to the time-based delay determination as it would have been performed by the server 47 (as described subsequently with reference to Figure 9b), provided that logbook data is available. Alternatively, if no logbook data is cached (for example, because there have not been any position-based requests concerning the current travel of the transportation means beforehand), at least the reference data contained in the timetable 3 can be displayed to the user. In this branch, the process then terminates at 24.

If the re-verification at 25 confirms that the mobile communication link is still present or available, the user device 1 generates a time-based request at 26. The request includes the PNR identification and the time-stamp of the current time (as stated above, it is also possible that the time-stamp is only added later by the server 47 when it receives the request). At the server side (now referring again to Figure 9b), steps 31 and 32 are executed as described before. The determination at 33 shows that the request does not include a geo-position, i.e. that it is a time-based request. Hence, server 47 performs the time-based delay determination, visualized on the left-hand of Figure 9b.

At 34, the server 47 checks whether the transportation means indicated by the PNR identification is present in the logbook 5. If this is not the case, the server at least tries to retrieve the timetable information at steps 35 and 37 and returns, for example, the next arrival station and the scheduled arrival to the user device 1 at 39. A warning or remark might be included emphasizing that this is only the scheduled, but not the actual arrival time. If even the scheduled information contained in the timetable 3 is not accessible for some reason, an error message will be returned to the user device 1 at 38.

If the test at 34 turns out that real-time delay information regarding the user's current transportation means is available in the logbook 5, the time-based delay calculation is performed at 36. The entries in the logbook 5 pertaining to the current leg of the transportation means are retrieved by applying the constraint realTime $\leq$ time-stamp $\leq$ realArr. The parameters "realTime" and "realArr" are part of the logbook entries (cf. Figure 8). The "realTime" values correspond to the time-stamps of the previous position-based requests which have been led to the entries of the logbook 5. The "realArr" values refer to the actual arrival at the next station which was estimated by the previous real-time delay determinations. Hence, the logbook entries having values of "realTime" lower than or equal to the value of the time-stamp associated with the current time-based request contain results of previous delay determinations. Logbook entries having values of "realArr" equal to or greater than the value of the time-stamp associated with the current time-based request are presumably referring to the current leg on which the user's transportation means is located. If "realArr" is, however, lower than the time-stamp of the request, it can be assumed that the respective entry refers to a previous leg and the transportation means has already reached the next arrival station. This could be an indication that the delay indicated by this entry is not up-to-date anymore.

The way of calculating the real-time delay depends on the number logbook entries and their time values. For example, if the logbook 5 contains one entry referring to the current leg of the transportation means, the next arrival station ("stArr"), the estimate arrival time ("realArr") and the delay value ("delay") of that logbook entry are retrieved at 36 and returned to the user device 1 at 40. If, on the other hand, no logbook entry fulfils the above condition (i.e. realTime ≤ time-stamp ≤ realArr), only an error message may be returned at 38. Alternatively, at least the scheduled information (next arrival station, scheduled arrival) may be retrieved from the timetable 3 and returned to the user device 1. If the logbook 5 contains several entries which, however, only pertain to previous legs (i.e. time-stamp ≥ realArr), an extrapolation may be performed on the delay values of these older entries and the resulting delay value may be returned as a rough estimation. In this case, again a warning or remark could be added that the delay information may be inaccurate. In the end, the process returns to the user device 1 (Figure 9c). If feasible (i.e. if real-time delay information was provided by the server 47), the user device 1 updates its cache at 46 and the process terminates at 48.

Finally, the data flow in case (iv) (no position determination and no mobile communication link available) is as follows:

If the user device 1 already initially determines the unavailability of the mobile communication link at 21, local time-based delay determination may be possible if logbook data has been cached previously, or at least timetable data may be presented to the user. In this case, it can be referred to the description of steps 22 and 23 which has been given above with reference to case (ii). If no logbook and/or timetable data is available in the cache and the check at 22 is therefore unsuccessful, the process terminates at 24.

If the mobile communication link is, however, available at 21, the cache is updated at 29 and 30. If the mobile communication link is then released subsequently and the absence of the link is determined at 25, time-based delay determination should be possible at 22 and 23. This is similar to the time-based delay determination by the server which has been described in detail before with reference to case (iii). In this case, the process likewise terminates at 24.

Figure 10 present a high-level overview of a possible architecture for the present delay determination system. In this example, the user device 1 includes a position determination function in the form of a GPS transceiver 50. To implement the caching function, a certain portion of the user device's memory (either a volatile RAM or a non-volatile memory such as a flash memory) is utilized as a cache 53. The client-related functions of the present delay determination are implemented by a delay determination mobile application 51. Communication with the user/passenger is possible via a graphical user interface such as a touchscreen. The graphical user interface is, inter alia, used by the user for entering his/her itinerary information such as a PNR number or transportation means connection information and for displaying the real-time delay information.

On the other hand, a server side 47 provides web services to the user devices 1. It comprises infrastructure which maintains the underlying data, in particular the timetables 3, the detailed reference schedules 4 and the logbooks 5. In the example being directed to real-time delay calculation of trains, the server-side infrastructure comprises a Rail Distribution Platform 54 (RDP), a RailIT server 55 and a database 56.

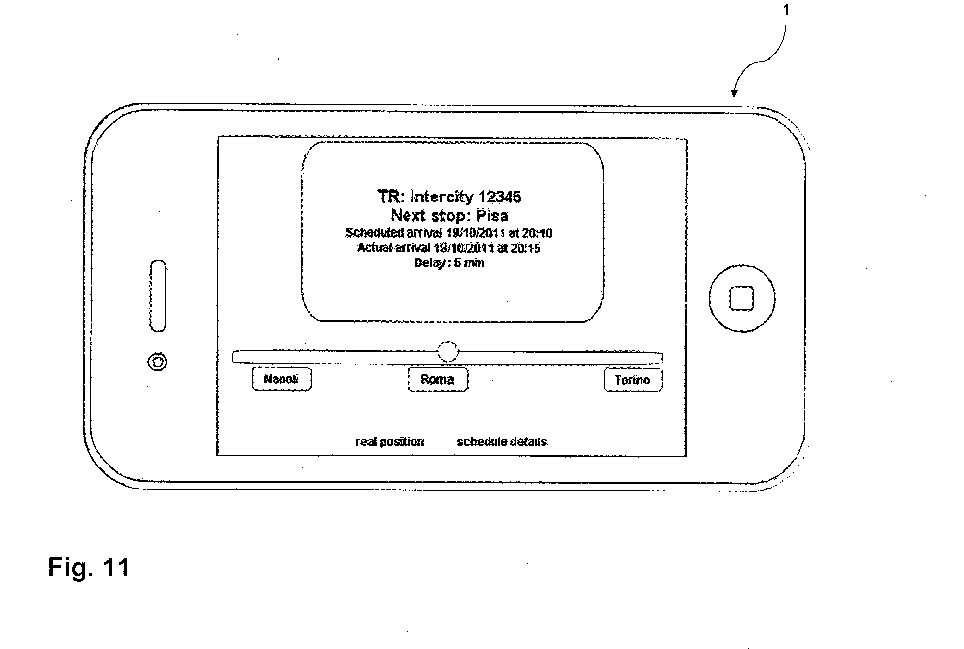

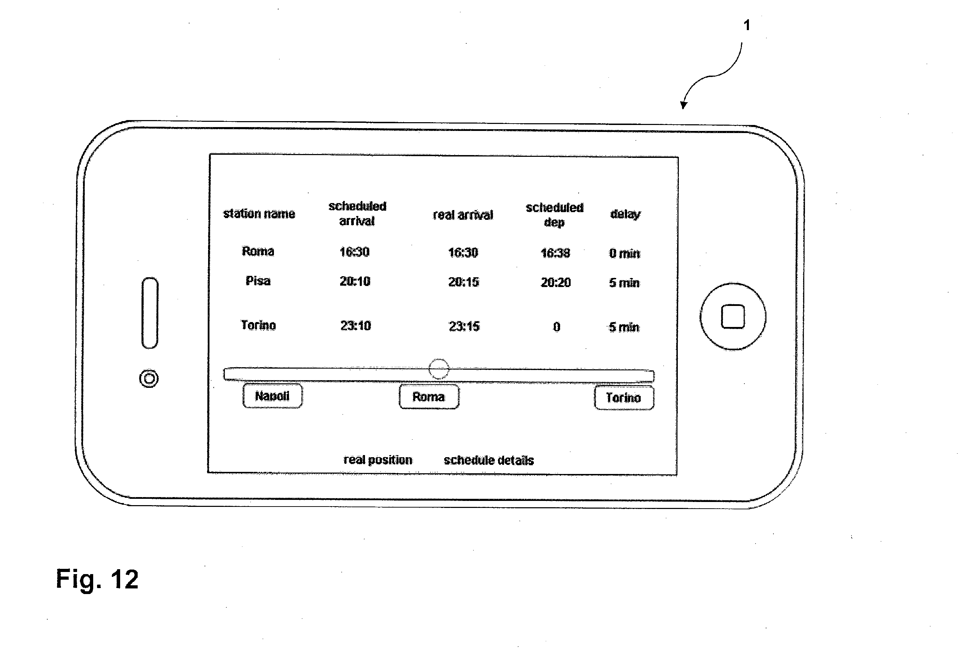

Figures 11 and 12 visualize an example of a graphical user interface of an exemplary smartphone 1 by means of which the software installed on the smartphone 1 displays the determined real-time delay information to the user. The main screen as depicted by Figure 11 shows the identification information of the transportation means ("Intercity 12345"), the next planned stop ("Pisa"), scheduled information related to this next station ("Scheduled arrival 19/10/2011 at 20:10), the estimated actual arrival at that station ("Actual arrival 19/10/2011 at 20:15) and the delay ("Delay: 5 min"). Further below, the actual position of the transportation means and certain important stops ("Napoli", "Roma", "Torino") are indicated. Those stations at which the transportation means was on time may be specifically highlighted, for example by green background colour. Stations at which the transportation means was or is probably going to be delayed may be highlighted in a different fashion, for example by red background colour. A button, for example labelled "schedule details", leads the user to a table-like overview of the scheduled and calculated arrival/departure times for the major stations (shown by Figure 12). Additionally or alternatively, a full list of legs and upcoming arrival stations along with the scheduled arrival/departure times and the calculated ones is presented.

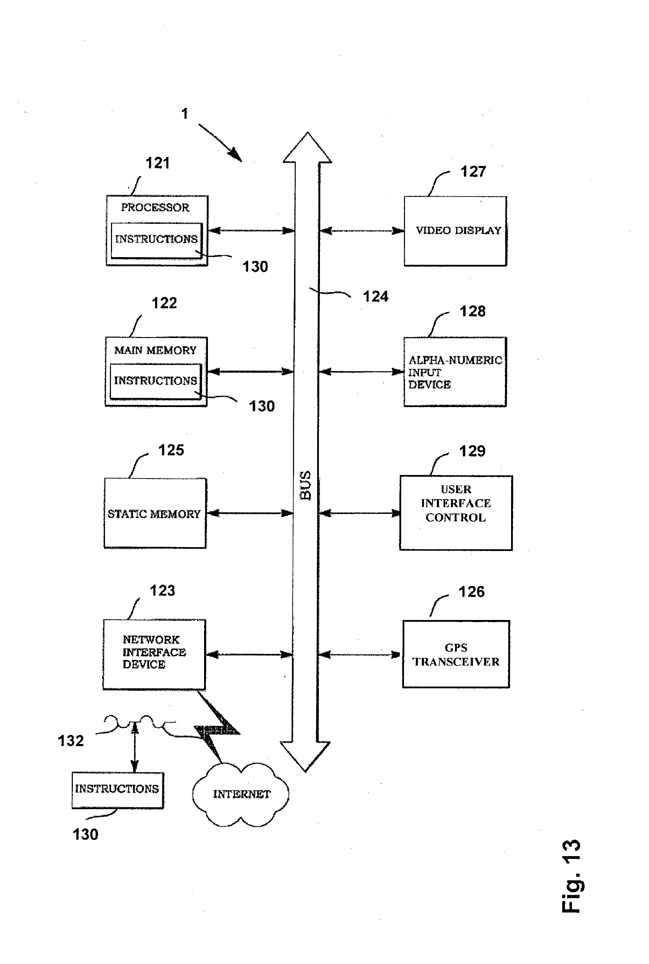

Finally, Figure 13 is a diagrammatic representation of the internal structure of a user device 1. The user device 1 is arranged to execute a set of instructions, to cause it to perform any of the methodologies discussed herein. The mobile communication device includes a processor 121, a main memory 122 and a wireless network interface 123 (such as a Wi-Fi and/or Bluetooth interface) and/or a 2G/3G/4G mobile network interface device (not shown), all of which communicate with each other via a bus 124. It further includes a static memory 125, e.g. non-removable flash or solid state drive or a removable Micro or Mini SD card, which permanently stores the software enabling the user device 1 to execute the local delay determination functions and to communicate with the server-side infrastructure 47. Furthermore, it includes a display 127, preferably a touch screen, a user interface (touch screen) control module 129 and, optionally, an additional (non-virtual) alpha-numeric and cursor input device 128 (if such an input device is present). The wireless network interface device 123 connects the user device 1 to server-side infrastructure 47. An optional GPS transceiver 126 provides for location determination. A set of instructions (i.e. software) 130 embodying any one, or all, of the methodologies described above, resides completely, or at least partially, in the static memory 125. When being executed, respective instructions and/or data reside in the main memory 122 and/or the processor 121. The software 130 may further be transmitted or received as a propagated signal 132 through the wireless network interface device 123 or the 2G/3G/4G mobile network interface from/to the a server within the server-side infrastructure depicted by Figure 10 or the Internet.

The server-side infrastructure 47 is constructed in a similar way with the exception that some or all of these components may not have any wireless network interfaces and GPS modules.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

**Claims**

1. A method of determining a real-time delay of a scheduled transportation means which runs along a route according to a timetable, wherein the route comprises at least one leg, wherein determining the real-time delay is based on a detailed reference schedule indicating arbitrary time-stamped reference positions of the transportation means being on time, the method comprising:

   - a position-based determination comprising

      • receiving a request for the transportation means' real-time delay by a user device located on the transportation means, the request indicating at least the current position of the transportation means;
      • calculating the transportation means' real-time delay on the basis of the current position indicated in the request, a time-stamp and the time-stamped reference positions of the detailed reference schedule;
      • returning the calculated real-time delay to the requesting user device;
      and
      • storing the calculated real-time delay into a logbook;

   - a time-based determination comprising

      • in response to a request by a different or the same user device not indicating the current position of the transportation means, returning the real-time delay on the basis of the logbook containing real-time delay entries with respect to the transportation means.

2. The method according to claim 1, wherein the time-stamp is determined by the reception of the request.

3. The method according to claim 1 or claim 2, wherein the arbitrary time-stamped reference positions of the transportation means are collected through requests by user devices located on the transportation means, wherein the requests indicate at least the current position of the transportation means and the transportation means is validated to be on time.

4. The method according to any one of claims 1 to 3, wherein in response to a request by a different or the same user device not indicating the current position of the transportation means, the most recent real-time delay entry in the logbook is returned.

5. The method according to any one of claims 1 to 3, wherein in response to a request by a different or the same user device not indicating the current position of the transportation means, real-time delay entries in the logbook are extrapolated; and the result of the extrapolation is returned.

6. The method according to any one of the previous claims, wherein the request by a different or the same user device not indicating the current position of the transportation means is transmitted by a device incapable of determining its current position.

7. The method according to any one of the previous claims, wherein calculating the real-time delay comprises a linear interpolation between the time-stamped reference positions in the detailed reference schedule in case the current position indicated in the request by the user device does not exactly match an entry in the detailed reference schedule indicating one of the time-stamped reference positions.

8. The method according to any one of the previous claims, wherein the request further contains an identification code which allows identifying the timetable of the transportation means.

9. The method according to anyone of the previous claims, wherein the position-based determination further comprises:

   - caching at least the detailed reference schedule at the requesting user device,
   and
   - in response to a request by the user device indicating at least the current position of the transportation means, determining the real-time delay locally at the user device.

10. The method according to claim 9, wherein the position-based determination further comprises:

   - storing the locally determined real-time delay in a local logbook of the user device, and
   - the user device transmitting the local logbook to include it into a central logbook.

11. The method according to anyone of the previous claims, the transportation means being a train, a ship, a bus, an airplane, a tram or a shuttle service vehicle.

12. A computer system for determining a real-time delay of a scheduled transportation means which runs along a route according to a timetable, wherein the route comprises at least one leg, wherein determining the real-time delay is based on a detailed reference schedule indicating arbitrary time-stamped reference positions of the transportation means being on time,

   - the computer system being configured to perform a position based determination of the real-time delay of the transportation means by being configured to:

      • receive a request for the transportation means' real-time delay by a user device located on the transportation means, the request indicating at least the current position of the transportation means;
      • calculate the transportation means' real-time delay on the basis of the current position indicated in the request, a time-stamp indicated by the reception of the request, and the corresponding time-stamped reference position of the detailed reference schedule;
      • return the calculated real-time delay to the requesting user device;
      • store the calculated real-time delay into a logbook;

   - the computer system further being configured to perform a time-based determination of the real-time delay of the transportation means by being configured to

      • return the real-time delay on the basis of the logbook containing real-time delay entries with respect to the transportation means in response to a request by a different or the same user device not indicating the current position of the transportation means.

13. A non-transitory computer readable storage medium having computer program instructions stored therein, which when executed on a computer system cause the computer system to determine a real-time delay of a scheduled transportation means which runs along a route according to a timetable, wherein the route comprises at least one leg, wherein determining the real-time delay is based on a detailed reference schedule indicating arbitrary time-stamped reference positions of transportation means being on time, the instructions - when executed - causing the computer system

• in a position-based determination to

• receive a request for the transportation means' real-time delay by a user device located on the transportation means, the request indicating at least the current position of the transportation means;
• calculate the transportation means' real-time delay on the basis of the position indicated in the request, a time-stamp indicated by the reception of the request, and the corresponding time-stamped reference position of the detailed reference schedule;
• return the calculated real-time delay to the requesting user device; and
• store the calculated real-time delay into a logbook;

- in a time-based determination to

• in response to a request by a different or the same user device not indicating the current position of the transportation means, return the real-time delay on the basis of the logbook containing real-time delay entries with respect to the transportation means.

14. Computer program for instructing a computer to perform the method of anyone of the claims 1 to 11.

position-based determination

time-based determination

user device 1

request indicating current position

request not indicating current position

detailed reference schedule 4

position, timestamp

delay calculation 12

delay calculation 7

storing

logbook 5

return delay 8

Fig. 1

EP 2 747 005 A1

**1**

*geo-pos*, time-stamp, pnr

**6**

time-stamp, pnr

**9**

GPS

yes          no

**Search for geo-pos
in the schedules
Table, *pnr* table**

| | pnr | |
|---|---|---|

**2**

*leg*, geo-pos, time-stamp

| | timetable | |
|---|---|---|

**3**

**Update
trainMotion
table**

**10**

| | detailed
reference
schedule | |
|---|---|---|

**4**

**Validation**

**11**

leg, geopos, time-stamp

**Delay
calculation**

**12**

**Search for
timestamp in
logbook**

**7**

leg, geopos,
time-stamp,
*delay*

| | logbook | |
|---|---|---|

**5**

**update the
logbook table**

**13**

next arrival station &
real-time delay

**8**

# Fig. 2

EP 2 747 005 A1

PNR

- Arrival Station
- Departure Station
- Train ID
- ...

2

**Fig. 3**

| TrainID | stID | lat | lng | ArrTD | DepTD | Dist_leg |
|---------|------|-------|------|-------|-------|----------|
| Tr1 | St1 | 43,55 | 7,02 | - | 07:30 | |
| Tr1 | St2 | 43,59 | 7,12 | 07:38 | 07:40 | 11,63 |
| Tr1 | St3 | 43,70 | 7,28 | 08:01 | - | 20,50 |

3

**Fig. 4**

<table>
<tr><td>trainID</td><td>LegID</td><td>time</td><td>lat</td><td>lng</td><td>valid</td></tr>
<tr><td>Tr1</td><td>1</td><td>07:35</td><td>43.56</td><td>7.11</td><td>Yes</td></tr>
<tr><td>Tr1</td><td>1</td><td>07:36</td><td>43.57</td><td>7.11</td><td>Yes</td></tr>
<tr><td>Tr1</td><td>1</td><td>07:37</td><td>43.58</td><td>7.11</td><td>No</td></tr>
<tr><td>Tr1</td><td>1</td><td>07:38</td><td>43.59</td><td>7.12</td><td>Yes</td></tr>
<tr><td>Tr1</td><td>2</td><td>07:43</td><td>43.60</td><td>7.13</td><td>Yes</td></tr>
<tr><td>Tr2</td><td>1</td><td>20:22</td><td>23.57</td><td>10.11</td><td></td></tr>
</table>

4

**Fig. 5**

EP 2 747 005 A1

07:30                                    08:01

St1                                      St3

43.55; 7.02          43.65; 7.15        43.70; 7.26

Dl          32.1 Km                    GeoPos difference
Tl          31 min                     time difference        } Calculated only once

Dp          18.22 Km                   GeoPos difference
Tp          17:35 min                  lin. interpolation      } Calculated real time

Fig. 6

# Fig. 7

EP 2 747 005 A1

Realtime

8:12

Time

8:01

7:38

7:30

Planned time

7:52

Reference motion curve for train X

Passenger Location input at run time

Delay

43.55; 7.02

43.59; 7.12

43.65; 7.25    43.7; 7.28

Position

Departure station St1

Intermediate station St2

Arrival station St3

| trainId | realTime | planTime | lat | lng | stDep | stArr | planDep | planArr | realDep | realArr | delay |
|---------|----------|----------|-------|------|-------|-------|---------|---------|---------|---------|-------|
| Tr1 | 7:46 | 7:36 | 43.57 | 7.11 | St1 | St2 | 07:30 | 07:38 | 07:30 | 07:48 | **10** |
| Tr1 | 8:12 | 7:52 | 43.65 | 7.25 | St2 | St3 | 07:40 | 08:01 | 07:50 | 08:21 | **20** |

Query timestamp    Planned Time        Leg        Delay calculation

5

# Fig. 8

EP 2 747 005 A1

EP 2 747 005 A1

START — 19

1

MOBILE

20 — CHECK PNR

21
COMMUNICATION
LINK AVAILABLE?

NO

YES

29
IS CACHE
EMPTY?

YES

30
UPDATE CACHE
QUERYING TIMETABLE,
DETAILED REFERENCE
SCHEDULE AND
LOGBOOK

NO

25
COMMUNICATION
LINK AVAILABLE?

NO

YES

22
CACHE
AVAILABLE?

YES

23
INTERPOLATE NEXT
STATION AND ACTUAL
POSITION USING TIME

NO

27
GPS
AVAILABLE?

NO

YES

END

24

26 — QUERY USING
PNR + TIMESTAMP

28
QUERY USING
PNR + TIMESTAMP
+ GEO-POSITION

Fig. 9a

to Fig. 9b

from Fig. 9a

47

SERVER

31

ARE PNR
TRAIN LEGS IN
TIMETABLE?

NO                                    YES

32

RETRIEVE
TIMETABLE DATA
AND UPDATE
TIMETABLE

33

SENT
GEO-POSITION?

NO                        YES

41

DETECT LEG
USING GPS
COORDINATES
FROM THE
TIMETABLE

42

INTERPOLATE
SENT
GEO-POSITION
WITH THE DETAILED
REFERENCE
SCHEDULE

34

TRAIN
ASSOCIATED
WITH PNR
PRESENT IN THE
LOGBOOK?

NO

35

SEARCH FOR IN
THE TIMETABLE

43

CALCULATE
DELAY

YES

36

REAL-TIME
TIMESTAMP ≥
REAL-TIME
ARRIVAL

NO          NO

37

FOUND

YES

44

CALCULATE
REAL-TIME
ARRIVAL

45

UPDATE LOGBOOK
(REAL-TIME
SCHEDULED TIME
REAL-TIME ARRIVAL
DELAY)

38

RETURN
ERROR

39

RETURN
"stArr"
"scArr"
"warning"

40

RETURN
"stArr"
"realArr"
DELAY

to Fig. 9c

Fig. 9b

24

Fig. 9c

Fig. 10

TR: Intercity 12345
Next stop: Pisa
Scheduled arrival 19/10/2011 at 20:10
Actual arrival 19/10/2011 at 20:15
Delay : 5 min

Napoli          Roma          Torino

real position          schedule details

Fig. 11

Fig. 12

**1**

121
PROCESSOR
INSTRUCTIONS
130

122
MAIN MEMORY
INSTRUCTIONS
130

124

125
STATIC MEMORY

BUS

123
NETWORK
INTERFACE
DEVICE

132

INSTRUCTIONS
130

INTERNET

127
VIDEO DISPLAY

128
ALPHA-NUMERIC
INPUT
DEVICE

129
USER
INTERFACE
CONTROL

126
GPS
TRANSCEIVER

Fig. 13

Europäisches
Patentamt

European
Patent Office

Office européen
des brevets

# EUROPEAN SEARCH REPORT

Application Number

EP 12 29 0452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 008957 A (NAVITIME JAPAN CO LTD) 12 January 2012 (2012-01-12) * the whole document * | 1-14 | INV. G06Q10/08 G08G1/127 |
| X | JP 2010 231303 A (NEC CORP) 14 October 2010 (2010-10-14) * the whole document * | 1-14 | |
| A | EP 2 065 867 A1 (VODAFONE HOLDING GMBH [DE]) 3 June 2009 (2009-06-03) * the whole document * | 1-14 | |

| TECHNICAL FIELDS SEARCHED (IPC) |
|---|
| G06Q G08G |

The present search report has been drawn up for all claims

| Place of search | Date of completion of the search | Examiner |
|---|---|---|
| The Hague | 26 April 2013 | Lutz, Andreas |

EPO FORM 1503 03.82 (P04C01)

## ANNEX TO THE EUROPEAN SEARCH REPORT
## ON EUROPEAN PATENT APPLICATION NO.

EP 12 29 0452

This annex lists the patent family members relating to the patent documents cited in  the above-mentioned European search report.
The members are as contained in the European Patent Office EDP file on
The European Patent Office is in no way liable for these particulars which are merely given for the purpose of information.

26-04-2013

| Patent document cited in search report | | Publication date | Patent family member(s) | Publication date |
|---|---|---|---|---|
| JP 2012008957 | A | 12-01-2012 | NONE | |
| JP 2010231303 | A | 14-10-2010 | NONE | |
| EP 2065867 | A1 | 03-06-2009 | NONE | |

EPO FORM P0459

For more details about this annex : see Official Journal of the European Patent Office, No. 12/82

**REFERENCES CITED IN THE DESCRIPTION**

**Patent documents cited in the description**

- JP 06044495 A